Europäisches Patentamt

European Patent Office

Office européen des brevets

(11) Veröffentlichungsnummer: **0 209 765 B1**

(12) EUROPÄISCHE PATENTSCHRIFT

(45) Veröffentlichungstag der Patentschrift: **30.09.92**

(21) Anmeldenummer: **86109021.5**

(22) Anmeldetag: **02.07.86**

(51) Int. Cl.⁵: **H02H 3/02**, H02H 7/26

(54) **Elektrische Installationsverteilung.**

(30) Priorität: **15.07.85 DE 3525252**

(43) Veröffentlichungstag der Anmeldung:
**28.01.87 Patentblatt 87/05**

(45) Bekanntmachung des Hinweises auf die Patenterteilung:
**30.09.92 Patentblatt 92/40**

(84) Benannte Vertragsstaaten:
**DE FR GB IT**

(56) Entgegenhaltungen:
**EP-A- 0 096 601     WO-A-81/01092
DE-A- 2 136 658     DE-A- 2 545 919
DE-A- 3 111 255     FR-A- 2 147 841
US-A- 4 174 496**

(73) Patentinhaber: **SIEMENS AKTIENGESELL-
SCHAFT
Wittelsbacherplatz 2
W-8000 München 2(DE)**

(72) Erfinder: **Wolf, Johann, Dipl.-Ing.
Foehrenweg 20
W-8401 Pentling(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine elektrische Installationsverteilung nach Oberbegriff von Patentanspruch 1. Danach sind mehrere Abgänge von einem gemeinsamen Eingang gespeist. Die Abgänge sind gegen Störungen auf der Verbraucherseite, wie Kurzschluß, Überlast und Fehlerströme, durch Abschalten geschützt, wozu die Strompfade durch Sensoren, beispielsweise Meßwandler, überwacht sind. Die Sensoren stehen mit einer Zentralelektronik in Verbindung, um erforderlichenfalls eine Unterbrechung von Strömen durch elektrisch in Reihe angeordnete Schaltmittel zu erzielen. Die Schaltmittel können in bestimmten Betriebszuständen durch die Zentralelektronik angesteuert werden. Als Schaltmittel dient ein Hauptschalter, der mehreren Schaltmitteln in Abzweigen vorgeordnet ist.

Bei einer derartigen bekannten Installationsverteilung (EP-A1-0096601) ist der Hauptschalter mit einem elektromagnetischen Auslöser und mit Schaltschloß und Löschkammer nach Art von Leistungsschutzschaltern ausgerüstet, indessen die Schaltmittel in den Abzweigen nur thermische Auslöser aufweisen. Sowohl der Hauptschalter als auch die Schaltmittel in den Abzweigen können von einer Zentralelektronik aus gesteuert werden. Die Schaltmittel in den Abzweigen können im Prinzip auch reguläre Leistungsschutzschalter sein. Diese Schaltmittel dienen der Strombegrenzung beim Abschalten.

Es ist auch eine Anordnung zur Schaltung elektrischer Leistung durch steuerbare Halbleiter und eine Schutzvorrichtung hierfür bekannt (DE-A-2 136 658), die im wesentlichen mit einem kontrollierten Einschalten mittels einer Signalfolge von Freigaben arbeitet. Es wird auch ein Ein- und Ausschalten abgehandelt. Eine Strombegrenzung unter Betriebsbetriebsbedingungen ist dagegen nicht vorgesehen.

Auf dem Markt befindliche Installationsverteilungen werden dagegen aus einzelnen Geräten zusammengesetzt, die einerseits auf Verteilen, Schalten oder Schützen spezialisiert sind, die aber andererseits Mehrfachfunktionen bereitstellen. Derartige übliche Verteilungen sind zwar beim Erstellen flexibel, sie weisen jedoch eine Reihe von Nachteilen auf:
Die Funktionsweise ist durch die Verkabelung zur Energieleitung und gegebenenfalls durch Verlegen von Leitungen zum Steuern und Verriegeln in Verbindung mit weiteren Bauelementen festgelegt. Solche Verteilungen können nur mit erheblichem Aufwand geändert werden. Bei komfortableren Verteilungen ist es auch aufwendig, sie zu erstellen. Die einzelnen Geräte in ihren Funktionen aufeinander abzustimmen, ist - wenn überhaupt - nur bedingt möglich. Ein übliches Abstimmungsproblem ist unter Selektivität bekannt.

Der Erfindung liegt die Aufgabe zugrunde, die eingangs geschilderte Installationsverteilung (EP-A1-0 096 601) hinsichtlich ihrer Steuerbarkeit und ihrer Selektivität weiter zu verbessern.

Die Lösung der geschilderten Aufgabe erfolgt durch eine elektrische Installationsverteilung nach Patentanspruch 1. Danach sind die Schaltmittel in den Abzweigen steuerbare Halbleiteranordnungen, die steuerseitig mit Steuerausgängen der Zentralelektronik in Verbindung stehen. Dadurch ist nicht nur eine Strombegrenzung beim Abschalten, sondern auch im Betrieb möglich. Hierzu ist die Zentralelektronik so ausgeführt, daß ein Vergleich der Signale der Sensoren mit abzweispezifischen Strom- und Zeitwerten zur Strombegrenzung unter Betriebsbedingungen vorgenommen wird. Der den Abzweigen vorgeordnete Hauptschalter kann gleichfalls in an sich bekannter Weise von der Zentralelektronik aus gesteuert werden. Es liegt also jeweils eine elektrische Reihenschaltung aus Hauptschaltern und steuerbarer Halbleiteranordnung vor. Eine Verteilung mit den gewünschten Funktionen kann leicht erstellt werden, wobei man ohne Geräte mit Mehrfachfunktionen auskommt. Die Verteilung ist dadurch in der Funktionsweise flexibel.

Rechnergestützte Schalteinrichtungen sind in den verschiedenartigsten Ausbildungen bekannt: So ist es bekannt, daß bei einer Reihenschaltung von Leitungsschutzschalter, Fehlerstromschutzschalter und Abzweigautomaten das Steuergerät nur die Abzweigschalter beaufschlagt (FR-PS 2 147 841). Es ist auch bekannt, eine Zentralelektronik bei drei elektrisch in Reihe angeordneten Schaltern nur auf die mittlere Schalterart einwirken zu lassen (DE-A1-31 11 255). Bei einem anderen bekannten rechnergesteuerten Schaltgerät werden die von einem Sensor erhaltenen Signale im Rechner ausgewertet und danach einem einzelnen Schalter zugeführt (EP-B1-0 036 417).

Bei der erfindungsgemäßen elektrischen Installationsverteilung werden jeweils der Hauptschalter und die steuerbaren Halbleiteranordnungen in den Abzweigen von der Zentralelektronik nach festen oder variablen Betriebsprogrammen aufgrund der von Sensoren gewonnenen Signale angesteuert. Dadurch läßt sich eine abgestimmte Funktionsweise erzielen, die auch selektives Abschalten und eine Strombegrenzung unter Betriebsbedingungen ermöglicht.

Nach einer Weiterbildung sind den steuerbaren Halbleiteranordnungen in den Abzweigen nichtlineare Widerstände, beispielsweise Kaltleiter, vorgeordnet. Geeignete nichtlineare Widerstände weisen bei Nennstrom einen niedrigen Widerstand und bei länger anstehender Überlast oder bei Kurzschluß einen überproportional hohen Widerstand auf. Der Stromverlauf zu einem Abzweig erfolgt daher vom Eingang über den Hauptschalter, den nichtlinearen Widerstand und die steuerbare Halbleiteranordnung zum Abgang eines Abzweiges. Diese nichtlinearen Widerstände sind in ihrer Bemessung darauf abgestimmt, daß die für die Halbleiteranordnung maximal zulässige Stromstärke und das Stromquadrat-Zeit-Integral nicht überschritten werden.

Es ist für bestimmte Funktionen und auch in der Praxis zum Anschließen von Leitungen an den Abzweigen vorteilhaft, jeweils einen vom Eingang durchgeführten und hinter den Halbleiteranordnungen verzweigten Mittelleiter bereitzustellen.

Dadurch können Mittel zur Residuumbildung des Stromes am Eingang und in den Abzweigen hinter der Verzweigung des Mittelleiters eingesetzt werden. Nach diesem Prinzip arbeiten bekanntlich Fehlerstromschutzschalter.

Es ist günstig, in den Abzweigen hinter den Halbleiteranordnungen Schaltvorrichtungen zum Kurzschließen des Außenleiters mit dem Mittelleiter bzw. mit einem Schutzleiter anzuordnen. Dadurch wird im Abzweig trotz der Verwendung von Halbleiterelementen Strom- und Spannungslosigkeit im Abzweig verbraucherseitig sichergestellt.

In der Praxis ist es vorteilhaft, in den Abzweigen an ihrem Ausgang jeweils Außenleiter und Mittelleiter in einheitlichem Abstand, beispielsweise im Abstand der Leiter von Stegleitungen, anzuordnen.

Wenn an der Zentralelektronik externe Anschlüsse für eine Stromflußsteuerung bzw. -regelung ausgebildet sind, kann die Installationsverteilung auch für eine Steuerung bzw. Regelung des Stromflusses herangezogen werden.

Der Hauptschalter kann mit einer Wiedereinschaltvorrichtung versehen sein oder auch von einer für die Wiedereinschaltfunktion ausgelegten Zentralelektronik nach einem Ausschaltvorgang entsprechend wieder eingeschaltet werden. So läßt sich eine automatische Wiedereinschaltung nach einer gewissen Zeit bzw. Verzögerung bewirken, wodurch die Funktion eines Limiters mit Trenneigenschaften durch die Zentralelektronik erzielt wird.

Nach einer Ausgestaltung ist die Zentralelektronik mit Sensoren an den Außenleitern in der Einspeisung und in den Abzweigen verbunden und dafür ausgelegt, an externen Anschlüssen Auswertungen zur Energie- und Leistungserfassung bereitzustellen. Dadurch läßt sich ein integrierter Betrieb nach Energie- und Leistungsdaten entsprechend übergeordneten wirtschaftlichen Gesichtspunkten fahren.

Die Erfindung soll nun anhand von in der Zeichnung grob schematisch wiedergegebenen Ausführungsbeispielen näher erläutert werden:

In Figur 1 ist ein Beispiel für eine Schaltungsanordnung wiedergegeben.

In Figur 2 ist die Schaltungsanordnung nach Figur 1 mit Weiterbildungen versehen dargestellt.

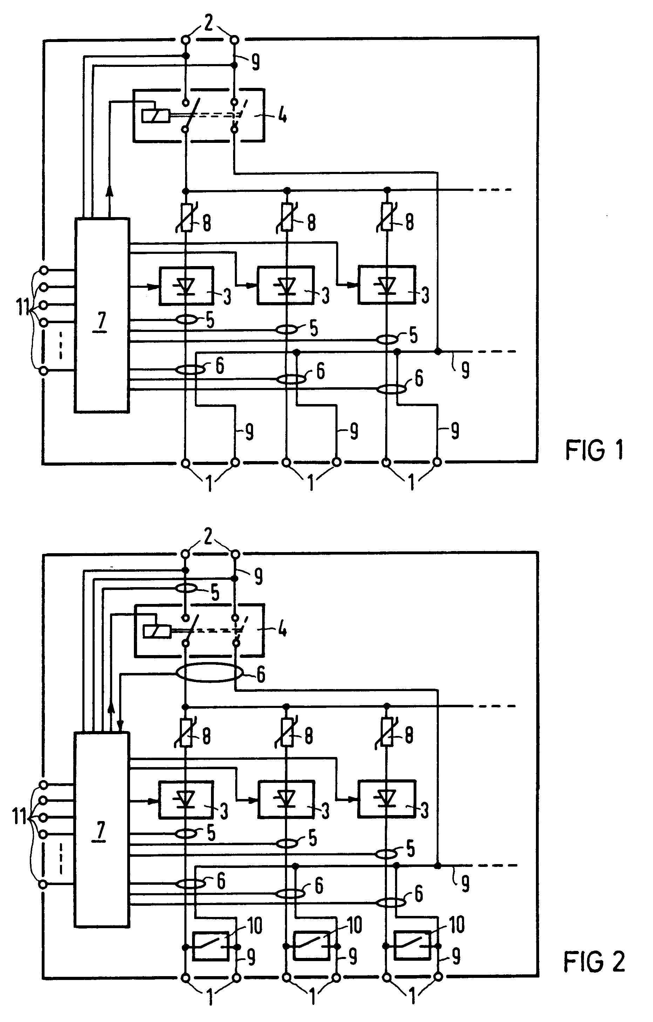

Die elektrische Installationsverteilung nach Figur 1 weist mehrere Abgänge 1 auf, die von einem gemeinsamen Eingang 2 gespeist werden. Sie sind gegen Störungen auf der Verbraucherseite durch steuerbare Halbleiteranordnungen 3 und einen vorgeordneten Hauptschalter 4 geschützt. Die Strompfade sind durch Sensoren 5 und 6, beispielsweise Meßwandler überwacht, die mit einer Zentralelektronik 7 in Verbindung stehen.

Die steuerbaren Halbleiteranordnungen 3 stehen steuerseitig mit Steuerausgängen der Zentralelektronik 7 in Verbindung.

Nach einer Weiterbildung sind den steuerbaren Halbleiteranordnungen 3 in den Abzweigen nichtlineare Widerstände 8, beispielsweise Kaltleiter, vorgeordnet. Diese sind so bemessen, daß die für die Halbleiteranordnung maximal zulässige Stromstärke und das Stromquadrat-Zeit-Integral nicht überschritten werden. Dadurch läßt sich im Störungsfall eine Strombegrenzung erzielen.

In den Abzweigen 1 ist nach dem Ausführungsbeispiel jeweils ein vom Eingang 2 durchgeführter und hinter den Halbleiteranordnungen 3 verzweigter Mittelleiter 9 bereitgestellt. Dadurch können Mittel zur Residuumbildung des Stromes nicht nur am Eingang, sondern auch in den Abzweigen 1 hinter der Verzweigung des Mittelleiters 9 angeordnet werden. Im Ausführungsbeispiel sind das die Sensoren 6.

Nach Figur 2 sind in den Abzweigen 1 hinter den Halbleiteranordnungen 3 Schaltvorrichtungen 10 zum Kurzschließen des Außenleiters mit dem Mittelleiter 9 angeordnet. Man kann auch auf einen Schutzleiter kurzschließen lassen. Dadurch ist verbraucherseitig in den Abzweigen 1 Spannungs- und Stromlosigkeit trotz der Verwendung von steuerbaren Halbleiteranordnungen 3 sichergestellt. Für die Praxis ist es günstig, wenn in den Abzweigen 1 an ihrem Ausgang jeweils Außenleiter und Mittelleiter in einheitlichem Abstand, wie in der Zeichnung veranschaulicht, angeordnet sind. Es kann in der Praxis vorteilhaft sein, diesen Abstand nach den Abmessungen gebräuchlicher Stegleitungen auszubilden.

Die Zentralelektronik 7 weist im Ausführungsbeispiel externe Anschlüsse 11 für eine Stromflußsteuerung bzw. für eine Stromflußregelung auf. Der Hauptschalter 4 kann mit einer Wiedereinschaltvorrichtung versehen sein. Hauptschalter und Zentralelektronik können auch dafür eingerichtet sein, den Hauptschalter 4 nach einem Ausschaltvorgang wieder einzuschalten. Wenn mit einer so ausgelegten Zentralelektronik nach einer gewissen Zeit, also verzögert wieder eingeschaltet wird, ist die Funktion eines Limiters mit Trenneigenschaft erzielt.

Die Zentralelektronik 7 ist mit Sensoren 5 und 6 in den Abzweigleitungen 1 verbunden und die Halbleiteranordnungen 3 werden von der Zentralelektronik angesteuert. Diese Ansteuerung kann entsprechend einem Vergleich mit gespeicherten abzweigspezifischen Strom- und Zeitwerten vorgenommen werden.

Im Ausführungsbeispiel nach Figur 2 ist die Zentralelektronik 7 mit Sensoren 5 an den Außenleitern in der Einspeisung 2 und in den Abzweigen 1 verbunden. Sie kann dann dafür ausgelegt sein, an externen Anschlüssen 11 Auswertungen zur Energie- und Leistungserfassung bereitzustellen.

Die Sensoren 5 an den Außenleitern dienen der Stromerfassung und die Sensoren 6 an Außenleitern und Mittelleiter ermöglichen eine Residuumbildung. Die Sensoren 6 können im Prinzip als Summenstromwandler verstanden werden, wie sie von Fehlerstromschutzschaltern geläufig sind.

**Patentansprüche**

1. Elektrische Installationsverteilung mit mehreren Abgängen (1), die von einem gemeinsamen Eingang (2) gespeist werden und die gegen Störungen auf der Verbraucherseite, wie Kurzschluß, Überlast und Fehlerströme, durch Abschalten geschützt sind, wozu die Strompfade durch Sensoren (5, 6), beispielsweise Meßwandler, überwacht sind, die mit einer Zentralelektronik (7) in Verbindung stehen, und wobei eine Unterbrechung von Strömen durch elektrisch in Reihe angeordnete Schaltmittel in Ansteuerung durch die Zentralelektronik erzielt wird, wobei ein Hauptschalter (4) mehreren Schaltmitteln in Abzweigen (1) vorgeordnet ist , **dadurch gekennzeichnet,** daß die Schaltmittel in den Abzweigen (1) steuerbare Halbleiteranordnungen (3) sind, die steuerseitig mit Steuerausgängen der Zentralelektronik (7) in Verbindung stehen und eine Strombegrenzung unter Betriebsbedingungen ermöglichen, wozu die Zentralelektronik (7) so ausgeführt ist, daß ein Vergleich der Signale der Sensoren (5, 6) mit abzweigspezifischen Strom- und Zeitwerten zur Strombegrenzung unter Betriebsbedingungen vorgenommen wird.

2. Elektrische Installationsverteilung nach Anspruch 1 , **dadurch gekennzeichnet,** daß den steuerbaren Halbleiteranordnungen (3) in den Abzweigen nichtlineare Widerstände (8) vorgeordnet sind, die in ihrer Bemessung darauf abgestimmt sind, daß die für die Halbleiteranordnung maximal zulässige Stromstärke und das Stromquadrat-Zeit-Integral nicht überschritten werden.

3. Elektrische Installationsverteilung nach Anspruch 1 , **dadurch gekennzeichnet,** daß in den Abzweigen (1) jeweils ein vom Eingang (2) durchgeführter und hinter den Halbleiteranordnungen (3) verzweigter Mittelleiter (9) bereitgestellt ist.

4. Elektrische Installationsverteilung nach Anspruch 3 , **gekennzeichnet durch** Mittel zur Residuumbildung (Sensoren (6)) des Stromes am Eingang (2) und in den Abzweigen (1) hinter der Verzweigung des Mittelleiters (9).

5. Elektrische Installationsverteilung nach Anspruch 3 , **dadurch gekennzeichnet,** daß in den Abzweigen (1) hinter den Halbleiteranordnungen (3) Schaltvorrichtungen (10) zum Kurzschließen des Außenleiters mit dem Mittelleiter bzw. einem Schutzleiter angeordnet sind.

6. Elektrische Installationsverteilung nach Anspruch 3 , **dadurch gekennzeichnet,** daß in den Abzweigen (1) an ihrem Ausgang jeweils Außenleiter und Mittelleiter in einheitlichem Abstand, beispielsweise im Abstand der Leiter von Stegleitungen, angeordnet sind.

7. Elektrische Installationsverteilung nach Anspruch 1 , **dadurch gekennzeichnet,** daß an der Zentralelektronik (7) externe Anschlüsse (11) für eine Stromflußsteuerung bzw. Regelung ausgebildet sind.

8. Elektrische Installationsverteilung nach Anspruch 1 , **dadurch gekennzeichnet,** daß der Hauptschalter (4) mit einer Wiedereinschaltvorrichtung versehen ist.

9. Elektrische Installationsverteilung nach Anspruch 1 , **dadurch gekennzeichnet,** daß der Hauptschalter (4) und die Zentralelektronik (7) dafür eingerichtet sind, den Hauptschalter nach einem Ausschaltvorgang verzögert wieder einzuschalten.

10. Elektrische Installationsverteilung nach Anspruch 1 , **dadurch gekennzeichnet,** daß die Zentralelektronik (7) mit Sensoren (5) an den Außenleitern in der Einspeisung und in den Abzweigen (1) verbunden ist und daß sie dafür ausgelegt ist, an externen Anschlüssen (11) Auswertungen zur Energie- und Leistungserfassung bereitzustellen.

## Claims

1. An electric distribution installation with several outgoing circuits (1) which are fed by a common input (2), and which are protected against failure at the consumer end, such as short-circuit, overload and fault currents, by disconnection, wherein the current paths are monitored by sensors (5,6), for example measuring transformers, which are connected to a central electronic system (7), and whereby an interruption of currents is achieved by switch means arranged electrically in series, with control by the central electronic system, whereby an isolating switch (4) is arranged before several switch means in branches (1),
characterised in that the switch means in the branches (1) are controllable semi-conductor arrangements (3) which are connected on the control side to control outputs of the central electronic system (7), and which enable current limiting under operating conditions, for which the central electronic system (7) is designed such that a comparison of the signals of the sensors (5,6) is undertaken with current and time values, specific to the branches, for current limiting under operating conditions.

2. An electrical distribution installation according to claim 1, characterised in that non-linear resistors (8) are arranged before the controllable semi-conductor arrangements (3) in the branches, which resistors are adjusted in their values such that the maximum permissible current strength and the current square time integral for the semi-conductor arrangement are not exceeded.

3. An electrical distribution installation according to claim 1, characterised in that in the branches (1) in each case, a neutral conductor (9) is provided, lead through from the input (2) and branched behind the semi-conductor arrangements (3).

4. An electrical distribution installation according to claim 3, characterised by means for the formation of residue (sensors (6)) of the current at the input (2) and in the branches (1) behind the branching of the neutral conductor (9).

5. An electrical distribution installation according to claim 3, characterised in that in the branches (1) behind the semi-conductor arrangements (3) there are arranged switch devices (10) for short-circuiting the phase conductor with the neutral conductor or a protective conductor.

6. An electrical distribution installation according to claim 3, characterised in that in the branches (1) at their output there are arranged in each case phase conductors and neutral conductors equally spaced, for example at the distance from the conductors to the twin cables.

7. An electrical distribution installation according to claim 1, characterised in that formed on the central electronic system (7) there are outer terminals (11) for current flow control or regulation.

8. An electrical distribution installation according to claim 1, characterised in that the isolating switch (4) is provided with a reclosing device.

9. An electrical distribution installation according to claim 1, characterised in that the isolating switch (4) and the central electronic system (7) are set up for the isolating switch to be connected again, with a delay, after the disconnection process.

10. An electrical distribution installation according to claim 1, characterised in that the central electronic system (7) is connected to sensors (5) on the phase conductors in the infeed and in the branches (1), and in that it is designed to provide evaluations for energy and output detection at the outer terminals (11).

## Revendications

1. Distributeur d'installation électrique comportant plusieurs sorties (1), qui sont alimentées par une entrée commune (2) et sont protégés par sectionnement vis-à-vis de perturbations sur le côté utilisateur, comme par exemple un court-circuit, une surcharge et des courants de défaut, un contrôle des voies de courant étant exécuté à cet effet par des capteurs (5,6), par exemple des transducteurs de mesure, qui sont raccordés à une unité électronique centrale (7), et dans lequel une interruption de courants par des moyens de coupure branchés électriquement en série est réalisée sous la commande de l'unité électronique centrale, un interrupteur principal (4) étant branché en amont de plusieurs moyens de coupure dans des dérivations (1),
caractérisé par le fait que les moyens de coupure situés dans les dérivations (1) sont des dispositifs à semiconducteurs commandables (3) qui sont raccordés, côté commande, à des sorties de commande de l'unité électronique centrale (7) et permettent une limitation de courant dans des conditions de fonctionnement, l'unité électronique centrale (7) étant agencée à cet effet de manière à réaliser une comparaison des signaux des capteurs (5,6) à des valeurs de courant et de temps, spécifiques aux dérivations, pour limiter le courant dans les conditions de fonctionnement.

2. Distributeur d'installation électrique suivant la revendication 1, caractérisé par le fait qu'en amont des dispositifs à semiconducteurs commandables (3) situés dans les dérivations, sont branchées des résistances non linéaires (8), dont le dimensionnement est accordé de manière que l'intensité de courant maximale admissible pour le dispositif à semiconducteurs et l'intégrale dans le temps du carré du courant ne soient pas dépassées.

3. Distributeur d'installation électrique suivant la revendication 1, caractérisé par le fait que respectivement un conducteur central (9), qui passe par l'entrée (2) et se ramifie en aval du dispositif à semiconducteurs (3), est préparé dans les dérivations (1).

4. Distributeur d'installation électrique suivant la revendication 3, caractérisé par des moyens pour la transformation de résidus (capteurs (6)) du courant à l'entrée (2) et dans les dérivations (1) en aval de la ramification du conducteur central (9).

5. Distributeur d'installation électrique suivant la revendication 3, caractérisé par le fait que des dispositifs de coupure (10) servant à court-circuiter le conducteur extérieur avec le conducteur central ou un conducteur de protection sont disposés dans les dérivations (1), en aval des dispositifs à semiconducteurs (3).

6. Distributeur d'installation électrique suivant la revendication 3, caractérisé par le fait que respectivement un conducteur extérieur et un conducteur central sont disposés, a une distance uniforme, par exemple à la distance des conducteurs de fils plats, au niveau de la sortie des dérivations (1).

7. Distributeur d'installation électrique suivant la revendication 1, caractérisé par le fait que des bornes extérieures (11) pour une commande du flux de courant ou une régulation sont ménagées dans l'unité électronique centrale (7).

8. Distributeur d'installation électrique suivant la revendication 1, caractérisé par le fait que l'interrupteur principal (4) est pourvu d'un dispositif de réenclenchement.

9. Distributeur d'installation électrique suivant la revendication 1, caractérisé par le fait que l'interrupteur principal (4) et l'unité électronique centrale (7) sont conçus pour réenclencher avec temporisation l'interrupteur principal, après une opération de coupure.

10. Distributeur d'installation électrique suivant la revendication 1, caractérisé par le fait que l'unité électronique centrale (7) est raccordée à des capteurs (5) présents dans les conducteurs extérieurs du système d'alimentation et dans les dérivations (1) et est agencée de manière à préparer, sur des bornes extérieures (11), des évaluations pour la détection d'énergie et de puissance.

FIG 1

FIG 2

7